# FASCICULE DE BREVET EUROPEEN

(11) **EP 3 788 023 B1**
(45) Date de publication et mention de la délivrance du brevet: **27.09.2023**
(21) Numéro de dépôt: 19725218.2
(22) Date de dépôt: 15.04.2019
(51) Int. Cl.: C04B 35/82, C04B 28/00, C04B 35/18, C04B 35/447

(54) **MATERIAU COMPOSITE COMPORTANT UN RENFORT FIBREUX ET UNE MATRICE GEOPOLYMERIQUE DE TYPE POLY(PHOSPHO-SIALATE) - PROCEDE DE FABRICATION ASSOCIE**
VERBUNDWERKSTOFF AUS EINER FASERVERSTÄRKUNG UND EINER POLY(PHOSPHO-SIALAT)-GEOPOLYMER-MATRIX - ZUGEHÖRIGES HERSTELLUNGSVERFAHREN
COMPOSITE MATERIAL COMPRISING A FIBROUS REINFORCEMENT AND A POLY(PHOSPHO-SIALATE) GEOPOLYMER MATRIX - ASSOCIATED MANUFACTURING METHOD

(30) Priorité: 30.04.2018 FR 1870508
(43) Date de publication de la demande: 10.03.2021
(73) Titulaire: Pyromeral Systems, 60810 Barbery (FR)
(72) Inventeur: DAVIDOVICS, Michel, 60700 Pont Sainte Maxence (FR); DAVIDOVITS, Joseph, 02100 Saint Quentin (FR); BATUT-ROLLIN, Magali, 60800 Fresnoy Le Luat (FR)
(74) Mandataire: Ipside
(86) Numéro de dépôt international: PCT/IB2019/053067
(87) Numéro de publication internationale: WO 2019/211686

(56) Documents cités:
- US-A1- 2014 053 493
- Oleg Bortnovsky ET AL: "PROPERTIES OF PHOSPHORUS-CONTAINING GEOPOLYMER MATRIX AND FIBER- REINFORCED COMPOSITE Mechanical Properties and Performance of Engineering Ceramics and Composites IV Edited by Properties of Phosphorus-Containing Geopolymer Matrix and Fi ber-Reinforced Composite INTRODUCTION", , 1 janvier 2010 (2010-01-01), XP055539601, Extrait de l'Internet: URL:https://ceramics.onlinelibrary.wiley.c om/doi/pdf/10.1002/9780470584262.ch27 [extrait le 2019-01-09]

## Description

### Domaine technique

La présente invention concerne un matériau composite comportant un renfort fibreux et une matrice géopolymérique de type phospho-sialate et le procédé de fabrication de ce matériau composite.

Plus particulièrement, la présente invention se rapporte à un matériau composite thermo structural comprenant un renfort de fibres, lesquelles peuvent être de type céramique, et une matrice minérale en géopolymère.

### Art antérieur

Les matériaux composites thermo structuraux conservent leurs propriétés mécaniques (résistance à la traction, flexion, module d'élasticité, notamment) pendant leur utilisation à une haute température supérieure à 1000°C, voire supérieure à 1200°C, pendant plusieurs dizaines d'heures d'utilisation, voire pendant plusieurs centaines d'heures d'utilisation. Dans un matériau composite thermo structural, on distingue le renfort fibreux, qui forme l'ossature du matériau composite et supporte en partie les efforts, de la matrice qui assure la cohésion du composite et protège le renfort de l'oxydation. Si à une température donnée, la matrice évite l'oxydation du renfort, on peut en déduire qu'à cette température, les propriétés mécaniques du composite seront conservées, au moins pendant une durée de plusieurs dizaines d'heures.

On connaît déjà dans l'art antérieur des matériaux composites constitués d'un renfort en fibres céramiques et d'une matrice géopolymère. Ainsi le document EP 0 288 502 décrit des matériaux composites à renfort fibreux comprenant une matrice géopolymère contenant un géopolymère poly(sialate) M(-Si-O-AI-O-), obtenu par synthèse alcaline. Les matériaux composites contenant ces matrices géopolymères poly(sialate) alcalins, plus particulièrement ceux contenant des fibres de carbone sont en général employés dans des applications de protection non-feu. En effet, au-dessus de la température de 424°C, le carbone s'oxyde dans l'air, et les résistances mécaniques du renfort diminuent considérablement. Ce phénomène est très connu dans l'art antérieur comme on peut le lire dans les documents WO 91/13830, WO 91/13840 ou WO 96/28398.

Il est connu, afin d'avoir un matériau composite thermostable, de traiter spécialement la fibre de carbone par des techniques de déposition en phase vapeur (vapeur de carbure de silicium ou de nitrure de silicium), électrophorèse et autres, ou d'employer un renfort de fibres en carbure de silicium SiC. Or, la fibre en SiC ou les traitements spéciaux anti-oxydation sont d'un coût très élevé, ce qui limite leurs applications. De plus, même dans ce cas de l'emploi de fibre SiC, les matériaux composites à matrice géopolymère alcalin ont une durée d'utilisation limitée à quelques dizaines d'heures à 1000°C. Au-delà de ce temps, l'oxydation du carbone se produit et se poursuit induisant une détérioration des propriétés mécaniques. A la place de ces fibres carbonées, on peut employer des fibres de silice ou des fibres d'alumine. Cependant, là aussi, la matrice poly(sialate) alcaline n'est pas adaptée, car les cations (K+ ou Na+) contenus dans ces géopolymères alcalins sont trop réactifs et réagissent avec les fibres. Il en résulte que les matériaux composites comprenant une matrice de type poly(sialate) alcaline et des fibres d'alumine ou de silicium ont des propriétés qui les rendent incompatibles avec certaines utilisations ; ils se brisent facilement notamment lorsqu'ils sont utilisés à haute température, c'est-à-dire à une température d'au moins 1000°C.

L'utilisation des fibres carbonées (C ou SiC) est souvent préférée pour leurs propriétés physiques particulières. C'est pourquoi l'art antérieur propose de nombreux systèmes à base céramique dans le but de protéger les fibres de ces composites contre l'oxydation à haute température. Ainsi, l'article intitulé "Microstructure and oxidation résistance of C-AlPO₄-mullite coating prepared by hydrothermal electrophoretic déposition for SiC-C/C composites, de Kai-Tong Wang, Li-Yun Cao, Jian-Feng Huang, Jie Fei et Bo-Ye Zhang, publié dans la revue Ceramics International, 39 (2013), page1037-1044, décrit un procédé dans lequel on prépare de la poudre de AlPO₄-cristobalite à 1400°C, on dilue cette poudre dans de l'isopropanol, et l'on dépose le mélange obtenu sur un tissu en fibres de carbure de silicium SiC, par électrophorèse, en autoclave et dans un four.

L'article intitulé "Fabrication and Properties of SiO2/Zirconium Phosphate--B2O3-SiO2 Anti-oxidation coatings for Cf/SiC Composites", de Xue-Jib Yang, Yu-Di Zhang, Chang-Rui Zhang et Bin Li, publié dans la revue Ceramics-Silikaty, 59 (3), page 233-237, en 2015, décrit un procédé dans lequel la première étape consiste à préparer des poudres de SiO₂, phosphate de zirconium, B₂O₃-SiO₂, à mélanger ces poudres et à les disperser dans une résine organique (en général de type phénolique). Ensuite, on imprègne le textile avec cette matrice organo-céramique, on sèche et on procède à l'opération de consolidation par frittage à 1200°C.

Dans ces deux techniques précitées, les pièces en composites sont de petites dimensions du fait de l'outillage requis pour obtenir la température de frittage.

Bien que le développement technologique des géopolymères se soit surtout concentré sur les géosynthèses en milieu alcalin, on connait quelques géopolymères obtenus en milieu acide. Il s'agit essentiellement de synthèses mettant en jeu la réaction chimique avec l'acide phosphorique H₃PO₄. Ces réactions sont décrites dans le Chapitre 13 intitulé "Phosphate-based Geopolymers" du livre de référence intitulé « Geopolymer Chemistry & Applications » de Joseph Davidovits, (2008-2015), publié par l'Institut Géopolymère, 3ème ed. ISBN 978-2-9514-8205-0 (2011) et 4è ed. ISBN 978-2-9514-8209-8 (2015). Cet ouvrage décrit deux types de géopolymères phosphatés acides :
a) le poly(phospho-siloxonate) (-Si-O-P-O-Si-)ₙ,
b) le poly(alumino-phosphate) (-Al-O-P-O-)ₙ, AlPO₄ et ses différentes variantes structurales, AlPO₄-berlinite et AlPO₄-cristobalite.

Les réactions chimiques entre l'acide phosphorique et la silice SiO₂ d'une part, et l'alumine Al₂O₃ d'autre part, sont employées dans la production de matériaux réfractaires. En général, on mélange une solution d'acide phosphorique avec les agrégats de quartz (SiO₂) ou d'alumine (Al₂O₃). Puis on tasse dans un moule, et on démoule et sèche à une température inférieure à 100°C. Enfin, on porte le matériau à la température de frittage voisine de 1200°C.

Selon l'ouvrage de référence cité plus haut, de nombreuses recherches ont été faites sur la formation du géopolymère poly(alumino-phosphate) (-Al-O-P-O-)ₙ (n étant supérieur à 2) dont le motif a pour formule brute AlPO₄, à partir d'un oxyde-alumino-silicate, désigné sous le terme général de métakaolin MK-750. Il s'agit d'un minéral extrêmement réactif vis à vis de l'acide phosphorique. En effet, comme tous les acides, il agit par dé-alumination de la structure alumino-silicate et forme immédiatement le phosphate d'alumine AlPO₄ et conduit à la séparation de la phase poly(siloxo) (Si-O-Si-O). Lorsque le métakaolin MK-750 réagit avec l'acide phosphorique, on obtient une masse à caractère céramique répondant à la structure AlPO₄-cristobalite, accompagnée de silice SiO₂, mais il n'y a pas formation de géopolymère poly(phospho-sialate) acide (-P-O-Si-O-Al-O-)ₙ. De plus, il est très difficile voire impossible d'imprégner un renfort textile avec la masse à caractère céramique obtenue à cause de la très forte viscosité de cette dernière et de la grande dimension des particules qui la composent. L'examen au microscope électronique à balayage, MEB, montre la présence de particules denses, de dimensions supérieures à 20 microns, généralement de l'ordre de 50 microns qui ne peuvent pénétrer entre les fibres du textile. Cette formulation à base de MK-750 ne peut donc pas être prise en considération dans la production de matériaux composites à renforts fibreux de type textile, et notamment de tissu. En effet, l'Homme de l'Art sait que l'obtention de matériaux composites à renforts fibreux dotés de hautes performances mécaniques et thermiques n'est possible que lorsque la matrice imprègne le tissu.

Par ailleurs, la publication d'Oleg Bortnovsky & al, intitulée «Properties of phosphorus-containing geopolymer matrix and fiber-reinforced composite », publiée dans Mechanical Properties and Performance of Engineering Ceramics and Composite IV éditée par Dileep Singh and Waltraud M. Kriven The American Ceramic Society en 2010 décrit des composites qui comportent un textile et une matrice géopolymérique de type alcaline, de formule générale (SiO₃)KₓH_{y}PO₄. Cette matrice a une température de fusion supérieure à 700°C. Les composites obtenus par utilisation de cette matrice ne se dilatent pas à des températures de l'ordre de 550°C. La matrice géopolymérique ne comporte pas d'aluminium. Elle comprend une phase cristalline d'oxyde de zirconium qui provient des matières premières mais l'oxyde de zirconium n'est pas lié de manière covalente au réseau polymérique de la matrice.

Un but de la présente invention est de proposer un procédé de fabrication d'un composite à renfort fibreux qui permet d'obtenir des matériaux composites à caractère céramique et réfractaire, à des températures inférieures à 1200°C, et notamment inférieures à 750°C.

Un but de la présente invention est de proposer un composite comportant une matrice polymérique et qui puisse être utilisé à des températures supérieures à 424°C, cette température étant celle à partir de laquelle le carbone C commence à s'oxyder dans l'air.

Un autre but de la présente invention est de proposer un nouveau matériau composite dont la matrice limite la dégradation/oxydation des fibres du renfort fibreux, notamment à base de carbone, et ce même à des températures de 1 000°C ou plus.

Un autre but de la présente invention est de proposer un matériau composite à renfort fibreux qui présente une résistance à la flexion 3 points (mesurée selon la norme indiquée) et/ou une résistance à la traction supérieure ou égale à 160 MPa.

Un autre but de la présente invention est de proposer un procédé de fabrication d'un matériau composite tel que précité qui permet de confectionner des pièces de très grandes dimensions, de plusieurs mètres carrés de surface.

Un autre but de la présente invention est de proposer un matériau composite qui présente des propriétés mécaniques sensiblement constantes, notamment en ce qui concerne la résistance en flexion 3 points selon la norme indiquée dans la demande et/ou la traction (mesurée également selon la norme indiquée dans la demande) même lorsqu'il est utilisé à des températures de l'ordre de 800°C, 1200°C ou 1600°C.

Pour remédier à tout ou partie des inconvénients liés à l'art antérieur précité, la présente invention propose un matériau composite contenant une matrice et un renfort fibreux, notamment un textile, noyé dans ladite matrice. De manière caractéristique, selon l'invention, ladite matrice comprend un géopolymère de type poly(phospho-sialate) de formule brute II suivante : (II) wSiO₂ :Al₂ O₃ :xP₂O₅ :yZrO₂ dans laquelle : w est égal ou supérieur à 1,00 et égal ou inférieur à 3,00 ; x est égal ou supérieur à 0,20 et égal ou inférieur à 2,00 ; y est égal ou supérieur à 0,02 et égal ou inférieur à 0,30 et ladite matrice présente une température de fusion supérieure à 700°C, notamment égale ou supérieure à 1200°C.

C'est le mérite de la Demanderesse que d'avoir montré que la matrice précitée présentait une température de fusion telle que précitée, du fait de la présence de zirconium. Cette température de fusion élevée fait que lorsque le composite est utilisé à des températures inférieures à sa température de fusion, la matrice reste à l'état de géopolymère et ne se vitrifie pas. La matrice ne réagit pas ou peu avec les fibres du renfort fibreux et/ou évite leur oxydation par l'oxygène de l'air. De cette manière, les propriétés mécaniques du composite, notamment sa résistance à la traction (mesurée selon la norme indiquée) et/ou sa résistance à la flexion 3 points (mesurée selon la norme indiquée) ne diminue(nt) que peu (de 5% ou moins) en fonction de la température d'utilisation du composite.

Les composites de l'invention présentent des propriétés mécaniques très élevées, notamment en termes de résistance à la traction et/ou résistance à la flexion 3 points. Ils sont également thermiquement stables, d'un point de vue chimique et mécanique et peuvent être utilisés à des températures allant jusqu'à 1200°C en fonction de la nature des fibres du textile pour des temps d'utilisation de plusieurs centaines d'heures, ou même allant jusqu'à 1600°C pour des temps d'utilisation plus courts.

Selon l'invention ladite matrice géopolymère correspond à la formule brute Il suivante : (II) *w*SiO₂:Al₂O₃:*x*P₂O₅:*y*ZrO₂ dans laquelle : *w* est égal ou supérieur à 1,00 et égal ou inférieur à 3,00 ; *x* est égal ou supérieur à 0,20 et égal ou inférieur à 2,00 ; y est égal ou supérieur à 0,02 et égal ou inférieur à 0,30.

Les teneurs molaires en oxyde de zirconium indiquées permettent d'obtenir une matrice dont la température de fusion est telle que précitée sans que le coût de revient du composite ne soit trop élevé.

Selon un mode de réalisation qui peut être combiné à l'un quelconque des modes de réalisation précités, la matrice géopolymère comprend ou est constituée d'un nano-composite, lequel comprend ou est constitué de trois phases :
a) une première phase polymérique, essentiellement constituée ou constituée par ledit géopolymère poly(phospho-sialate) acide de formule (I) (-P-O-Si-O-AI-O-)n dans laquelle n est supérieur à 2, et d'une charge micronisée de type Al₂O₃,
b) une seconde phase nodulaire constituée de nano sphères de silice SiO₂ amorphe ayant un diamètre inférieur à 2 microns, de préférence inférieur à 500 nm.
c) une troisième phase comportant des unités de formule -Si-O-( P-O-Zr-O-PO)-AI-O- et des unités de formule -Si-O-(P-O-Si-O-AI-) et servant de site de réticulation entre ladite première phase polymérique et ladite seconde phase nodulaire.

La troisième phase qui forme un réseau autour des deux autres, assure la cohésion de la matrice et permet de lui conférer une température de fusion élevée. Plus la troisième phase comprend d'unités de formule Si-O-( P-O-Zr-O-P-O)-AI-O-, plus la température de fusion de la matrice est élevée.

Ledit géopolymère de formule (I) peut comprendre également un géopolymère poly(alumino-phosphate) (-AI-O-P-O), de formule brute AlPO₄, de type berlinite et/ou un géopolymère poly(alumino-phosphate) (-AI-O-P-O), de formule brute AlPO₄ de type cristobalite.

Selon un mode de réalisation particulier, ladite matrice contient en outre du phosphate de zirconium (P-O-Zr-O-P-O)-, présent dans ladite première phase. Ce phosphate de zirconium qui n'est pas lié à la silice provient de la réaction de l'oxyde de zirconium lié aux particules de silice ZrO avec l'acide phosphorique. Il est préférable que la matrice contienne le moins possible de phosphate de zirconium car cette espèce diminue la teneur en géopolymère -Si-O-( P-O-Zr-O-P-O)-AI-O- de la troisième phase. Ainsi, la première phase sera de préférence constituée par ledit géopolymère poly(phospho-sialate) acide de formule (I) (-P-O-Si-O-AI-O-)n dans laquelle n est supérieur à 2, et d'une charge micronisée de type Al₂O₃.

Le nombre d'unités de formule -Si-O-(P-O-Zr-O-P-O)-AI-O- dépend notamment de la teneur en oxyde de zirconium dans la composition servant à former la matrice. Ainsi, selon un mode de réalisation particulier, qui peut être combiné avec l'un quelconque des modes de réalisation précités, la fraction molaire z= (nombre de moles de phosphates de zirconium dans ladite troisième phase) / (nombre de moles de SiO₂ dans la matrice) est égale ou supérieure à 0,02 et égale ou inférieure à 0,3 et notamment est égale à y. Le terme phosphate désigne tous les types de phosphate qui peuvent se lier à l'atome Zr, à savoir H₂PO₄⁻, H₂PO₄²⁻ et PO₄³⁻. Comme vu précédemment, les phosphates de zirconium peuvent être contenus dans le polymère de la troisième phase ou sous forme de phosphate de zirconium, présent dans la première phase. Lorsque z a une valeur telle que précitée, la troisième phase comporte plus d'unités de formule -Si-O-(P-O-Zr-O-P-O)-AI-O- que d'unités de formule Si-O-(PO-Si-O-AI-). La température de fusion de la matrice est ainsi augmentée de manière considérable.

Lorsque z est inférieur à 0,025, la matrice n'est pas suffisamment dopée avec l'oxyde de zirconium ; il s'ensuit que le géopolymère de ladite troisième phase contient plus d'unités de formule -Si-O-(P-O-Si-O-AI-) que d'unités de formule -Si-O-(P-O-Zr-O-PO)-AI-O- . La température de fusion de la matrice de ce type de composite est plus basse que celle des composites dont la matrice contient plus d'unités de formule -Si-O-(P-O-Zr-O-P-O)-AI-O- ; de tels matériaux s'avèrent néanmoins utiles dans certaines applications et présentent bien une matrice dont la température de fusion est supérieure à 700°C et supérieure à la température de l'étape de post-cuisson de leur procédé de fabrication tel que décrit dans la présente demande de brevet.

Le renfort fibreux n'est pas limité selon l'invention. Il peut être constitué de fibres dispersées dans la matrice ou constitué d'un textile, tricot, tissu ou non tissé.

Le renfort fibreux sera avantageusement un tissu.

Le renfort fibreux peut être un textile, notamment un tissu choisi parmi les textiles comprenant/constituées de(s) fibres choisies parmi les fibres d'aluminosilicate, notamment les fibres d'alumine, les fibres de verre, les fibres de silice, les fibres de carbure de silicium, les fibres de carbone, les fibres de graphite et les mélanges d'au moins deux de ces fibres.

La Demanderesse a en effet mis en évidence que la matrice du composite de l'invention protège les fibres de carbone de l'oxydation et ne réagit pas chimiquement avec les fibres d'alumine et de silice et ce, même à des températures de l'ordre de 1 000°C.

La présente invention concerne également un procédé de fabrication d'un matériau composite à renfort fibreux, selon lequel, de manière caractéristique :
- on réalise une résine en mélangeant à une température sensiblement égale à 20 C, de l'acide phosphorique H₃PO₄, de l'hydroxyde d'alumine Al(OH₃), de la silice SiO₂ amorphe nodulaire comportant à sa surface de l'oxyde de zirconium notamment sous la forme Zr-O- et/ou -ZrOH et de l'eau H₂O , dans les rapports molaires suivants : P₂O₅ / SiO₂ égal ou supérieur à 0,20 et égal ou inférieur à 0,66; SiO₂ / Al₂O₃ égal ou supérieur à 1,0 et égal ou inférieur à 3; P₂O₅ / Al₂O₃ égal ou supérieur à 0,20 et égal ou inférieur à 2 et en laissant au repos le mélange obtenu pendant 1 à 2 heures ;
- on imprègne un textile constitué de ou comprenant des fibres choisies parmi les fibres d'aluminosilicate, notamment les fibres d'alumine, les fibres de verre, les fibres de silice, les fibres de carbure de silicium, les fibres de carbone, les fibres de graphite et les mélanges d'au moins deux de ces fibres avec ladite résine ;
- on réalise un matériau composite en durcissant le textile imprégné de la résine à une température supérieure à 80°C, de préférence supérieure à 118°C et inférieure à 260°C, dans un autoclave et sous vide ;
- on effectue une post-cuisson dudit matériau composite obtenu à l'étape précédente, à une température supérieure ou égale à 700°C.

La température de post-cuisson indique que la température de fusion de la matrice est bien supérieure à 700°C car la matrice obtenue est bien un géopolymère et non une structure amorphe de type verre. La matrice présente donc toujours une température de fusion supérieure à la température de post cuisson du procédé d'obtention du composite.

L'oxyde de zirconium sous forme -ZrO- (éventuellement ZrOH) et/ou -O-Zr-O se trouve sur la surface des nano sphères de silice SiO₂ amorphe (encore appelée silice amorphe nodulaire), à raison, par exemple, de 2% à 10% en mole d'oxyde de zirconium (ZrO-ZrO₂) pour une mole de SiO₂. L'interface entre la silice SiO₂ amorphe nodulaire qui constitue la seconde phase avec ladite troisième phase servant de site de réticulation est la liaison zircono-phosphate -Si-O-(P-O-Zr-O-P-O)-AI-O-. L'oxyde de zirconium (ZrO-ZrO₂) permet d'éviter la formation d'une phase fusible due à la réaction chimique entre SiO₂ et l'acide phosphorique. Comme cela a été décrit dans ce qui suit (cf. Tableau II), sans zirconium lié à la silice, il se crée un géopolymère acide de formule brute 2SiO₂.P₂O₅, de type poly(phospho-siloxonate) acide (-Si-O-PO-Si-)ₙ qui se ramollit et fond à une température qui se situe entre 900°C et 1000°C. Au contraire, dans le cadre de la présente invention, la liaison zircono-phosphate -Si-O-(P-O-Zr-O-P-O)-AI-O- résiste à des températures supérieures à 1200°C.

Le dopage en zirconium de la silice est obtenu en phase vapeur à une température supérieure à 2500°C, soit par électro fusion ou torche plasma. La silice est à l'état gazeux et se condense en gouttelettes qui lui confèrent l'appellation de silice nodulaire. La nature physique de la couche d'oxyde de zirconium obtenue après refroidissement est similaire à celle des nanoparticules d'oxyde de zirconium obtenues par sol-gel. Il s'agit d'une couche qui présente des phénomènes de surface à l'échelle nanométrique, comme on peut le lire dans l'article "Size-dependent density of zirconia nanoparticles", Agnieszka Opalinska et al., Beilstein J. Nanotechnol. (2015), 6, 27-35. Un de ces phénomènes est la présence du groupe -Zr-OH, qui se forme en surface au cours du refroidissement dans l'air. La réactivité chimique de cette surface est donc très élevée, bien supérieure à celle de la zircone ZrO₂ fabriquée industriellement par électro fusion. En présence d'acide phosphorique H₃PO₄, il se forme du phosphate acide de zirconium Zr(HPO₄)₂.H₂O qui va réagir avec, d'une part la silice SiO₂ amorphe nodulaire, d'autre part l'hydroxyde d'alumine Al(OH)₃. On obtient ainsi, après déshydroxylation et post-cuisson à 700°C, la liaison zircono-phosphate qui s'écrit -Si-O-(P-O-Zr-O-P-O)-AI-O- dans la terminologie géopolymère. On peut aussi quantifier cette liaison zircono-phosphate (ZrP) de la troisième phase par le rapport molaire "z" tel que précité.

Cependant, lorsque le dopage en atome de zirconium Zr est faible en quantité, et que le rapport molaire précité z a une valeur inférieure à 0,025, le site de réticulation est majoritairement de type poly(phospho-sialate), -Si-O-(P-O-Si-O-AI-) et la température de fusion du composite n'est pas considérablement augmentée par rapport à la température de fusion du polymère de formule I.

On peut mesurer quantitativement la présence de groupes Zr-OH dans la silice amorphe nodulaire dopée à l'oxyde de zirconium (ZrO-ZrO₂). Il suffit pour cela de prendre en compte, dans l'analyse pondérale des oxydes, la part dévolue à la perte au feu (Loi) qui se trouve être, en général, comprise entre 1% et 2,5% en poids.

S'agissant du textile, il n'est pas limité selon l'invention ; il peut s'agir d'un textile de silice de type Quartzel^{®} (Saint-Gobain Quartz), d'un textile de fibres d'alumine ou d'aluminosilicate (Hiltex ALF^{®}, commercialisé par Hiltex, ou Nextel^{®} commercialisé par 3M), d'un textile comportant ou constitué de fibres de carbure de silicium (Nicalon^{®} Ceramic Fibers commercialisé par COI Ceramics, Tyranno^{®} Fibers commercialisé par UBE Industries) ou d'un textile comportant ou constitué de fibres de carbone (Torayca^{®} commercialisé par Toray, Toho^{®} Tenax commercialisé par Teijin). Le textile peut être unidirectionnel ; il peut également s'agir d'un tissu, notamment d'un satin, d'un sergé, d'un taffetas, ou d'un feutre, par exemple. Les fibres textiles peuvent être désensimées et/ou recouvertes d'une interphase continue de type C (carbone) ou BN (nitrure de bore). Cette interphase, ou revêtement, peut être appliquée par dépôt chimique en voie gazeuse (CVD - Chemical Vapor Déposition) ou par trempage dans une solution puis pyrolyse. Ces mêmes textiles peuvent être utilisés pour le matériau composite de l'invention. Ces tissus sont utilisés dans les exemples qui suivent. Selon un mode de réalisation donnant des résultats particulièrement avantageux, la silice SiO₂ amorphe nodulaire comporte en surface 2% à 10% en mole de zirconium, notamment sous la forme -Zr-OH pour une mole de SiO₂.

La silice précitée présente un diamètre moyen inférieur ou égal à 5 microns et de préférence inférieur à 2 microns (dimension moyenne obtenue par tamisage) afin de pouvoir s'immiscer entre les fibres et dans les fibres du textile.

La présente invention, ses caractéristiques et les divers avantages qu'elle procure apparaitront mieux à la lecture de la description qui suit et qui fait références aux exemples ci-après, mentionnés à titre d'illustration et non limitatifs.

### EXEMPLES

### Exemple comparatif 1 : Comparaison d'un composite selon l'invention avec un composite tel que décrit dans l'exemple 1 du document WO 96/28398 et un composite obtenu par la technique de frittage décrite dans la publication de Xue-Jin Yang et al. de 2015.

On réalise un matériau composite selon l'invention comportant un tissu en fibres de carbone et une matrice conforme à l'exemple 4 qui suit. On réalise le matériau conforme à l'exemple 1 du document WO 96/28398 et on réalise un matériau tel que décrit dans la publication de Xue-Jin Yang *et al.* de 2015. On compare le comportement de ces deux composites comme suit. Les composites sont portés à 600°C pendant une durée variant de 1 à 6 heures. On calcule ensuite la masse résiduelle des fibres à partir de la perte de masse des matrices seules en fonction du temps. Les résultats sont regroupés dans le Tableau I,

**Tableau I**

| durée en heures | WO 96/28398 | Présente invention | Xue-Jin Yang |
|---|---|---|---|
| 0 | 0% | 0% | 0% |
| 1 | 9% | 3% | 1-3% |
| 3 | 25% | 4% | - |
| 6 | 34% | 6% | - |

On constate, au vu des résultats du Tableau I, que la matrice poly(phospho-sialate) acide (-P-O-Si-O-Al-O-)ₙ selon la présente invention permet de grandement limiter l'oxydation des fibres de carbone, en comparaison avec une matrice de poly(sialate) alcaline.

### Exemple comparatif 2 : réalisation d'une matrice poly(phospho-siloxonate)

On réalise donc une résine qui va former un géopolymère en mélangeant de la fumée de silice et une solution aqueuse d'acide phosphorique H₃PO₄ à 75% (concentration massique). On coule dans un moule puis, on durcit la résine à 250°C. On regarde ensuite l'évolution thermique de ce poly(phospho-siloxonate) en l'observant au microscope électronique à balayage MEB, après cuisson à 250°C, 700°C et 1000°C. Les résultats sont présentés dans le Tableau II ci-dessous.

**Tableau II**

| 250°C | 700°C | 1000°C |
|---|---|---|
| Forte présence de nanosphères de SiO₂ de toutes dimensions, | les nanosphères de SiO₂, de dimension > 2 microns ont disparu | la matrice est fondue; il s'agit d'un verre; aucune nanosphère de SiO₂ |

On constate que la réaction de géopolymérisation a lieu entre 250°C et 700°C, mais que le géopolymère poly(phospho-siloxonate) (-Si-O-P-O-Si-)ₙ se ramollit et fond à une température qui se situe en dessous de 1000°C. En fait, si l'on se réfère aux diagrammes de phases, on remarque que pour le système SiO₂-P₂O₅, il existe un eutectique à 980°C correspondant à la formule chimique brute 2SiO₂.P₂O₅ (voir le Phase Diagrams For Ceramists, Figure 364, American Ceramic Society, 1964). Il ne peut donc pas être employé sous forme de matrice pour matériaux composites thermo structuraux thermostables, équivalents à ceux développés dans la présente invention, à cause de sa température de ramollissement relativement basse.

### Exemple comparatif 3 : composite fibreux comprenant une matrice constituée de poly(alumino-phosphate) (-Al-O-P-O-)ₙ,

On choisit un hydrate d'alumine Al(OH)₃ de granulométrie inférieure à 10 microns que l'on fait réagir avec une solution aqueuse d'acide phosphorique H₃PO₄ à 75% (concentration massique). Puis on imprègne un textile avec la résine ainsi obtenue. Le tissu est constitué de fibres d'alumine (fibres Nextel de la société 3M). On durcit l'ensemble à l'autoclave en utilisant des technologies bien connues dans le cas des composites à matrice organique, ou à matrice géopolymère alcaline. L'art antérieur nous enseigne que la température de géopolymérisation du poly(alumino-phosphate) AlPO₄ se situe au-dessus de 118°C, et les exemples décrits dans l'ouvrage cité plus haut indiquent des températures de 113°C, 123°C et 133°C. Puis on procède à un post-traitement thermique à 700°C. On obtient ainsi un matériau composite solide. Ensuite, on découpe des échantillons dans le sens des fibres du textile afin d'effectuer des tests mécaniques. On détermine à l'aide de ces échantillons la résistance flexion 3 points à température ambiante et aussi à 800°C, selon la norme ASTM C1341 -06 et la tenue en traction, selon la norme ASTM C1275. Les résultats sont présentés dans le Tableau 3.

**Tableau III**

| | Température ambiante | à 800°C |
|---|---|---|
| Flexion 3 points (MPa) | 118 | 106 |
| Traction (MPa) | 109 | 92 |

Au vu des résultats du Tableau III, on constate que les valeurs sont inférieures à celles des matériaux composites de l'art antérieur avec matrice poly(sialate) alcaline qui se situent entre 200 MPa et 350 MPa à température ambiante. Ces valeurs sont également très inférieures à celles demandées par l'industrie pour ce type de composite thermo structural.

Dans toute la demande, les rapports entre les oxydes sont des rapports molaires, et les parties indiquées sont en poids.

### EXEMPLES DE REALISATION DE LA PRESENTE INVENTION

### EXEMPLE 1

On prépare une matrice portant le label Nr51 pour matériaux composites à l'aide d'un mélange réactionnel contenant : H₂O : 5,30 moles; P₂O₅ : 0,56 moles; SiO₂ dopée à l'oxyde de zirconium : 1,78 moles; Al₂O₃ : 1 mole.

Al₂O₃ provient d'un hydroxyde d'alumine Al(OH)₃ en poudre ; SiO₂ provient de silice amorphe nodulaire préparée par électro fusion et dopée à 2% en poids de ZrO₂, P₂O₅ provient d'une solution aqueuse d'acide phosphorique à 75% de concentration massique. Le rapport molaire des oxydes réactionnels est égal à:

| | |
|---|---|
| P₂O₅ / SiO₂ | 0.31 |
| SiO₂ / Al₂O₃ | 1,78 |
| P₂O₅ / Al₂O₃ | 0,56 |

On laisse maturer le mélange pendant 1 à 2 heures, puis on durcit à 120°C dans un moule fermé et on démoule et sèche à 250°C pendant 3 heures. Puis, l'échantillon est traité dans un four à air à 700°C pendant 3 heures.

Normalement, pour connaitre la nature minéralogique et la composition d'un matériau de type céramique, l'Homme de l'art utilise l'analyse par diffraction aux Rayons X. La Demanderesse a réalisé plusieurs diagrammes de diffraction X sur les matrices décrites dans les exemples de la présente invention. Malheureusement, ils sont inexploitables. En effet, pour le systèmes ternaire SiO₂ / P₂O₅ / Al₂O₃, ce qui est le cas de la présente invention, il est impossible de faire la différence entre une silice de type quartz et un phosphate d'alumine de type berlinite, une silice de type trydimite et un phosphate d'alumine de type trydimite, une silice de type cristobalite et un phosphate d'alumine de type cristobalite. En effet, il est bien connu par l'Homme de l'art que ces différents types de silice ont la même structure moléculaire, phénomène isostructural, que les différents types de phosphate d'alumine. Ils ont absolument le même diagramme de diffraction RX. Pour pallier cette difficulté, la Demanderesse a choisi le microscope électronique à balayage MEB, grossissement x3000, couplé avec l'analyse EDS. Les résultats sont présentés dans le Tableau 4 ci-dessous avec analyse EDS pour 3 points : Le point A est mesuré sur une silice nodulaire de dimension 3 microns, le point B dans une zone amorphe contenant quelques sphères de silice de diamètre 500 nm à 1 micron, le point C dans une zone amorphe sans sphère visible à ce stade du grossissement du cliché MEB.

Tableau IV : Analyse EDS au MEB, composition en atome pour cent dans le nano composite, échantillon Nr51

**Tableau IV**

| Éléments | point A | point B | point C |
|---|---|---|---|
| Al | 10,48 | 44,92 | 52,25 |
| Si | 76,46 | 27,25 | 19,10 |
| P | 9,11 | 26,81 | 28,02 |
| Zr | 3,95 | 1,48 | 0,23 |

Le point A) montre la sphère nodulaire de silice couverte par la phase de réticulation zircono-phosphate -Si-O-(P-O-Zr-O-P-O)-AI-O-. Le point B) correspond à la première phase polymérique pour laquelle on peut déduire la présence d'environ : 1 mole de zircono-phosphate (P-O-Zr-O-P-O)-, 25 moles de poly(phospho-sialate) (-P-O-Si-O-AI-O-), 9 moles d'Al₂O₃ qui n'a pas réagi et 1 mole de silice SiO₂ (petites sphères de 500nm). Pour le point C) la répartition est la suivante : 19 moles de poly(phospho-sialate) (-P-O-Si-O-AI-O-), 12 moles d'Al₂O₃ et 9 moles d'AlPO₄ poly(alumino-phosphate) (AI-O-P-O-).

### EXEMPLE 2:

On fabrique une nouvelle matrice géopolymère acide (Nr50) comme dans l'Exemple 1, mais avec les composés suivants : H₂O : 3,50 moles ; P₂O₅ : 0,37 moles ; SiO₂ : 1,18 mole ; Al₂O₃ : 1 mole.

Al₂O₃ provient d'un hydroxyde d'alumine Al(OH)₃ en poudre ; SiO₂ provient de silice amorphe nodulaire préparée par électro fusion et dopée à 2% en poids de ZrO₂ ; P₂O₅ provient d'une solution d'acide phosphorique à 75% de concentration dans l'eau. Le rapport molaire des oxydes réactionnels est égal à :

| | |
|---|---|
| P₂O₅ / SiO₂ | 0.31 |
| SiO₂ / Al₂O₃ | 1,18 |
| P₂O₅ / Al₂O₃ | 0,37 |

Les résultats de l'analyse EDS-MEB sont présentés dans le Tableau 5 ci-dessous avec analyse EDS pour 3 points : le point A correspond à une silice nodulaire de dimension 2 microns, le point B correspond à une zone amorphe contenant quelques sphères de silice de diamètre 500 nm à 1 micron, le point C est une zone amorphe avec quelques sphères visibles à ce stade du grossissement du cliché MEB.

Tableau V: Analyse EDS au MEB, composition en atome pour cent dans le nano composite, échantillon Nr50

**Tableau V**

| Éléments | point A | point B | point C |
|---|---|---|---|
| Al | 15,02 | 49,25 | 45,26 |
| Si | 69,16 | 31,73 | 36,40 |
| P | 11,09 | 18,79 | 18,05 |
| Zr | 4,31 | 0 | 0 |

Pour l'échantillon Nr50, le point A) montre la sphère nodulaire de silice couverte de la phase de réticulation zircono-phosphate -Si-O-(P-O-Zr-O-P-O)-AI-O-. Le point B) correspond à la première phase polymérique pour laquelle on peut déduire la présence d'environ : 18 moles de poly(phospho-sialate) (-P-O-Si-O-AI-O-) ainsi que 13 moles de silice SiO₂ (nano sphères de silice) et 9 moles d'Al₂O₃ qui n'a pas réagi. Pour le point C) la répartition est : 18 moles de poly(phospho-sialate) (-P-O-Si-O-AI-O-) + 18 moles de SiO₂ + 5,5 moles d'Al₂O₃.

Dans ces deux matrices Nr51 et Nr50, la première phase polymérique du nano composite constituant la matrice géopolymère contient essentiellement le poly(phospho-sialate) (-P-O-Si-O-AI-O-), de 18 à 25 moles, avec 5 à 12 moles d'une charge micronisée d'Al₂O₃, et 0 à 9 moles de poly(alumino-phosphate) (AI-O-P-O-) AIPO₄. On remarque que le poly(alumino-phosphate) (AI-O-P-O-) AlPO₄, n'est pas le composant principal de la phase polymérique de ce géopolymère acide, le composant majoritaire est le poly(phospho-sialate) (-P-O-Si-O-AI-O-).

### EXEMPLE 3

On fabrique une nouvelle matrice géopolymère acide (Nr13) comme dans les Exemples 1 et 2, mais avec les composés suivants : H₂O : 3,50 moles; P₂O₅ : 0,37 moles; SiO₂ : 2,02 moles; Al₂O₃ : 1 mole.

Al₂O₃ provient d'un hydroxyde d'alumine Al(OH)₃ en poudre); SiO₂ provient de silice amorphe nodulaire préparée par électro fusion et dopée à 4% en poids de ZrO₂, P₂O₅ provient d'une solution d'acide phosphorique à 75% de concentration dans l'eau. Le rapport molaire des oxydes réactionnels est égal à:

| | |
|---|---|
| P₂O₅ / SiO₂ | 0.18 |
| SiO₂ / Al₂O₃ | 2,028 |

| | |
|---|---|
| P₂O₅ / Al₂O₃ | 0,37 |

Cette matrice Nr13 est destinée à la confection d'un matériau composite à renforts fibreux. Avec le mélange réactionnel précité, on imprègne un tissu de type satin constitué de fibres contenant plus de 99% en masse d'alumine (Nextel^{®} Fabric 610 commercialisé par la société 3M). On superpose 6 morceaux du tissu imprégné obtenu sur un support plan en alternant le sens chaîne et le sens trame du tissu. On place le composite stratifié ainsi obtenu et son support dans une sache à vide. Une fois que le vide est fait (pression inférieure ou égale à 100 mbar en absolu), on place l'ensemble dans un autoclave sous une pression de 6 bars, à 150°C (première cuisson). Après avoir laissé l'ensemble pendant 6h dans les conditions de vide et de température précitées, on démoule le composite et on lui fait subir une post-cuisson de 3h à 700°C. Ensuite, on découpe des échantillons dans le sens des fibres du textile afin d'effectuer des tests mécaniques. Les résultats de ces tests sont regroupés dans le Tableau 6 ci-dessous.

On détermine à l'aide de ces échantillons la tenue en flexion 3 points à température ambiante et à 800°C, selon la norme ASTM C1341-06 et la tenue en traction, selon la norme ASTM C1275. Les résultats obtenus pour les échantillons du composite de l'Exemple 3 sont présentés dans le tableau 6 ci-dessous.

Tableau VI: Flexion 3 points (MPa) et traction (MPa), composite de l'Exemple 3.

**Tableau VI**

| | Température ambiante | Température: 800°C |
|---|---|---|
| Flexion 3 points (MPa) | 339 | 255 |
| Traction (MPa) | 214 | 170 |

### EXEMPLE 4

On réalise des échantillons de plaque composite comme dans l'Exemple 3. Ils sont soumis à une température de 1000°C ou de 1200°C pendant 100 heures. On laisse ensuite les échantillons revenir à la température ambiante et l'on teste leur tenue en flexion. On mesure également la perte de masse afin de déterminer si les fibres ont été dégradées. Les résultats sont regroupés dans le Tableau 7 ci-dessous.

Tableau VII: Détermination du vieillissement thermique du matériau composite de l'exemple 4; contrainte de flexion (MPa), module GPa et masse résiduelle en %

**Tableau VII**

| | nombre d'éprouvettes | Contrainte flexion (MPa) | Module (GPa) | Masse résiduelle |
|---|---|---|---|---|
| État initial | 3 | 356 | 73 | 100 |
| Après vieillissement thermique 100 heures à 1000°C | 3 | 317 | 71 | 99,7 |
| Après vieillissement thermique 100 heures à 1200°C | 3 | 166 | 80 | 98,8 |

On constate, au vu des résultats du tableau 7 que la contrainte de flexion diminue peu (baisse de 10,9% par rapport à l'état initial) avec un vieillissement à 1000°C. Si l'on se réfère au Tableau 2 qui montre la fusion entre 900°C et 1000°C du géopolymère poly(phospho-siloxonate) (-Si-O-P-O-Si)ₙ , on constate que le dopage à l'oxyde de zirconium (ZrO-ZrO₂) a rempli sa fonction puisque la contrainte est pratiquement inchangée à 1000°C. Cette contrainte diminue avec un vieillissement à 1200 °C, mais reste suffisamment élevée, bien supérieure aux matériaux composites de l'art antérieur, comme celui décrit ci-dessus dans le Tableau 3. Le module reste quasi constant. Le composite a perdu moins de 2% de masse quelle que soit la température du vieillissement.

Tout Homme de l'art comprendra aisément l'intérêt du procédé de fabrication des matériaux composites à renforts fibreux avec matrice géopolymère poly(phospho-sialate) acide, plus particulièrement lorsqu'il comparera les propriétés thermiques des matériaux contenant de la fibre d'alumine de type Nextel. Il notera aussi l'intérêt présenté par la présente invention pour les composites carbonés Cf /SiC. On constate en effet, au vu des résultats du Tableau 1, que la matrice de poly(phospho-sialate) acide (-P-O-Si-O-Al-O-)ₙ , selon la présente invention permet de grandement limiter l'oxydation des fibres de carbone, en comparaison avec une matrice de poly(sialate) alcalin. L'intérêt économique du procédé selon l'invention est donc évident. Bien entendu, cette matrice géopolymère peut être également utilisée avec tous les autres renforts fibreux connus par l'Homme de l'art ainsi qu'avec de nombreux autres renforts qui permettent de fabriquer des matériaux composites. On citera par exemple les particules de mica et autres particules similaires destinés à fabriquer des matériaux stables aux hautes températures.

L'Homme de l'art pourra également ajouter dans les mélanges réactionnels tout agent auxiliaire minéral ou organique connu pour augmenter la qualité de l'imprégnation et/ou diminuer la quantité d'air inclus dans la matrice. Diverses modifications peuvent donc être apportées par l'Homme de l'art à la matrice géopolymère acide et au procédé qui viennent d'être décrits uniquement à titre d'exemple, sans sortir du cadre de l'invention.

## Revendications

1. Matériau composite contenant une matrice et un renfort fibreux, notamment un textile noyé dans ladite matrice, **caractérisé en ce que** ladite matrice comprend un géopolymère de type poly(phospho-sialate) de formule brute Il suivante : (II) *w*SiO₂:Al₂O₃:*x*P₂O₅:*y*ZrO₂ dans laquelle : *w* est égal ou supérieur à 1,00 et égal ou inférieur à 3,00 ; *x* est égal ou supérieur à 0,20 et égal ou inférieur à 2,00 ; y est égal ou supérieur à 0,02 et égal ou inférieur à 0,30 et **en ce que** ladite matrice présente une température de fusion supérieure à 700°C, notamment égale ou supérieure à 1200°C.

2. Matériau composite selon la revendication 1 , **caractérisé en ce que** ladite matrice géopolymère comprend ou est constituée d'un nano-composite, lequel comprend ou est constitué de trois phases :
a) une première phase polymérique, essentiellement constituée par ledit géopolymère poly(phospho-sialate) acide de formule (I) (-P-O-Si-O-AI-O-)n dans laquelle n est supérieur à 2, et d'une charge micronisée de type Al₂O₃,
b) une seconde phase nodulaire constituée de nano sphères de silice SiO₂ amorphe ayant un diamètre inférieur à 2 microns, de préférence inférieur à 500 nm.
c) une troisième phase comportant des unités de formule -Si-O-( P-O-Zr-O-PO)-AI-O- et des unités de formule -Si-O-(P-O-Si-O-AI-) et servant de site de réticulation entre ladite première phase polymérique et ladite seconde phase nodulaire.

3. Matériau composite selon l'une quelconque des revendications précédentes, **caractérisé en ce que** ledit géopolymère comprend également un géopolymère poly(alumino-phosphate) (-AI-O-P-O), de formule brute AlPO₄, de type berlinite et/ou un géopolymère poly(alumino-phosphate) (-Al-O-P-O), de formule brute AlPO₄ de type cristobalite.

4. Matériau composite selon la revendication 2, **caractérisé en ce que** ladite matrice comprend, en outre, du phosphate de zirconium (P-O-Zr-O-P-O)-, présent dans ladite première phase polymérique.

5. Matériau composite selon l'une quelconque des revendications 2 à 4, **caractérisé en ce que** la fraction molaire z=(nombre de moles de phosphates de zirconium présent dans ladite troisième phase) /(nombre de moles de SiO₂ dans la matrice) est égale à ou supérieure à 0,025 et égale ou inférieure à 0,3 et notamment égale à y.

6. Matériau composite selon l'une quelconque des revendications 2 à 4, **caractérisé en ce que** la fraction molaire z=(nombre de moles de phosphates de zirconium présent dans ladite troisième phase)/(nombre de moles de SiO₂ dans la matrice) est inférieure à 0,025 et **en ce que** ladite troisième phase contient plus d'unités de formule -Si-O-(P-O-Si-O-AI-) que d'unités de formule - Si-O-(P-O-Zr-O-P-O)-Al-O-.

7. Matériau composite selon l'une quelconque des revendications précédentes, **caractérisé en ce que** ledit renfort est un textile, notamment un tissu choisi parmi les textiles comprenant/constituées de(s) fibres choisies parmi les fibres d'aluminosilicate, notamment les fibres d'alumine, les fibres de verre, les fibres de silice, les fibres de carbure de silicium, les fibres de carbone, les fibres de graphite et les mélanges d'au moins deux de ces fibres

8. Procédé de fabrication d'un matériau composite à renfort fibreux, selon l'une quelconque des revendications 1 à 7, **caractérisé en ce que** :
- on réalise une résine en mélangeant à une température sensiblement égale à 20 C, de l'acide phosphorique H₃PO₄, de l'hydroxyde d'alumine Al(OH₃), de la silice SiO₂ amorphe nodulaire comportant à sa surface de l'oxyde de zirconium, notamment sous forme -ZrO- et/ou -Zr-OH, et de l'eau H₂O , dans les rapports molaires suivants : P₂O₅ / SiO₂ égal ou supérieur à 0,20 et égal ou inférieur à 0,66 ; SiO₂ / Al₂O₃ égal ou supérieur à 1,0 et égal ou inférieur à 3 ; P₂O₅ / Al₂O₃ égal ou supérieur à 0,20 et égal ou inférieur à 2 et en laissant au repos le mélange obtenu pendant 1 à 2 heures ;
- on imprègne un textile constitué de ou comprenant des fibres choisies parmi les fibres d'aluminosilicate, notamment les fibres d'alumine, les fibres de verre, les fibres de silice, les fibres de carbure de silicium, les fibres de carbone, les fibres de graphite et les mélanges d'au moins deux de ces fibres avec ladite résine ;
- on réalise un matériau composite en durcissant le textile imprégné de la résine à une température supérieure à 80°C, de préférence supérieure à 118°C et inférieure à 260°C, dans un autoclave et sous vide ;
- on effectue une post-cuisson dudit matériau composite obtenu à l'étape précédente, à une température supérieure ou égale à 700°C.

9. Procédé de fabrication selon la revendication 8, **caractérisé en ce que** ladite silice SiO₂ amorphe nodulaire comporte en surface 2% à 10% en mole de zirconium sous la forme -Zr-O- et/ou -Zr-OH.

## Patentansprüche

1. Verbundwerkstoff, der eine Matrix und eine Faserverstärkung, insbesondere ein in die Matrix eingebettetes Textil, enthält, **dadurch gekennzeichnet, dass** die Matrix ein Geopolymer vom Typ Poly(phospho-sialat) der folgenden Summenformel II umfasst: (II) *w*SiO₂:Al₂O₃:*x*P₂O₅:*y*ZrO₂, wobei: *w* gleich oder größer als 1,00 und gleich oder kleiner als 3,00 ist; *x* gleich oder größer als 0,20 und gleich oder kleiner als 2,00 ist; *y* gleich oder größer als 0,02 und gleich oder kleiner als 0,30 ist, und dadurch, dass die Matrix eine Schmelztemperatur von größer als 700 °C, insbesondere gleich oder größer als 1200 °C aufweist.

2. Verbundwerkstoff nach Anspruch 1, **dadurch gekennzeichnet, dass** die geopolymere Matrix einen Nanoverbund umfasst oder aus diesem besteht, der drei Phasen umfasst oder aus diesen besteht:
a) eine erste polymere Phase, die im Wesentlichen aus dem Poly(phospho-sialat)säure-Geopolymer der Formel (I) (-PO-Si-O-Al-O-)n, in der n größer als 2 ist, und einem mikronisierten Füllstoff vom Typ Al₂O₃ besteht,
b) eine zweite kugelförmige Phase, die aus Nanokugeln aus amorphem Siliciumdioxid SiO₂ besteht, die einen Durchmesser von kleiner als 2 Mikrometer, vorzugsweise kleiner als 500 nm, aufweisen,
c) eine dritte Phase, die Einheiten der Formel -Si-O-(P-O-Zr-O-P-O-Al-O- und Einheiten der Formel -Si-O-(P-O-Si-O-Al-) umfasst und als Vernetzungsstelle zwischen der ersten polymeren Phase und der zweiten kugelförmigen Phase dient.

3. Verbundwerkstoff nach einem der vorstehenden Ansprüche, **dadurch gekennzeichnet, dass** das Geopolymer ebenfalls ein Poly(aluminiumphosphat)-Geopolymer (-Al-O-P-O) der Summenformel AlPO₄ vom Berlinit-Typ und/oder ein Poly(aluminiumphosphat)-Geopolymer (-Al-O-P-O) der Summenformel AlPO₄ vom Cristobalit-Typ umfasst.

4. Verbundwerkstoff nach Anspruch 2, **dadurch gekennzeichnet, dass** die Matrix weiter Zirconiumphosphat (P-O-Zr-O-P-O)- umfasst, das in der ersten polymeren Phase vorliegt.

5. Verbundwerkstoff nach einem der Ansprüche 2 bis 4, **dadurch gekennzeichnet, dass** der Molenbruch z = (Anzahl an Zirconiumphosphat-Molen, die in der dritten Phase vorliegen) / (Anzahl an SiO₂-Molen in der Matrix) gleich oder größer als 0,025 und gleich oder kleiner als 0,3 und insbesondere gleich y ist.

6. Verbundwerkstoff nach einem der Ansprüche 2 bis 4, **dadurch gekennzeichnet, dass** der Molenbruch z = (Anzahl an Zirconiumphosphat-Molen, die in der dritten Phase vorliegen) / (Anzahl an SiO₂-Molen in der Matrix) kleiner als 0,025 ist, und dadurch, dass die dritte Phase mehr Einheiten der Formel -Si-O-(P-O-Si-O-Al-) als Einheiten der Formel -Si-O-(P-O-Zr-O-P-O)-Al-O- enthält.

7. Verbundwerkstoff nach einem der vorstehenden Ansprüche, **dadurch gekennzeichnet, dass** die Verstärkung ein Textil ist, insbesondere ein Gewebe, ausgewählt aus Textilien, die Faser(n) umfassen/aus diesen bestehen, ausgewählt aus Aluminiumsilikatfasern, insbesondere Aluminiumoxidfasern, Glasfasern, Siliciumdioxidfasern, Siliciumcarbidfasern, Kohlenstofffasern, Graphitfasern und Mischungen von mindestens zwei dieser Fasern.

8. Verfahren zur Herstellung eines Verbundwerkstoffs mit Faserverstärkung nach einem der Ansprüche 1 bis 7, **dadurch gekennzeichnet, dass**:
- ein Harz hergestellt wird, indem man bei einer Temperatur von im Wesentlichen gleich 20 °C Phosphorsäure H₃PO₄, Aluminiumoxidhydroxid Al(OH₃), amorphes kugelförmiges Siliciumdioxid SiO₂, das an seiner Oberfläche Zirconiumoxid, insbesondere in der Form -ZrO- und/oder - Zr-OH, umfasst, und Wasser H₂O in den folgenden Molverhältnissen mischt: P₂O₅ / SiO₂ gleich oder größer als 0,20 und gleich oder kleiner als 0,66; SiO₂ / Al₂O₃ gleich oder größer als 1,0 und gleich oder kleiner als 3; P₂O₅ / Al₂O₃ gleich oder größer als 0,20 und gleich oder kleiner als 2, und indem man die erhaltene Mischung 1 bis 2 Stunden lang ruhen lässt,
- ein Textil, das aus Fasern besteht oder diese umfasst, ausgewählt aus Aluminiumsilikatfasern, insbesondere Aluminiumoxidfasern, Glasfasern, Siliciumdioxidfasern, Siliciumcarbidfasern, Kohlenstofffasern, Graphitfasern und Mischungen von mindestens zwei dieser Fasern mit dem Harz imprägniert;
- ein Verbundwerkstoff hergestellt wird, indem man das mit dem Harz imprägnierte Textil bei einer Temperatur von größer als 80 °C, vorzugsweise größer als 118 °C und kleiner als 260 °C, in einem Autoklaven und unter Vakuum härtet;
- eine Nachhärtung des im vorstehenden Schritt erhaltenen Verbundwerkstoffs bei einer Temperatur von größer oder gleich 700 °C vorgenommen wird.

9. Herstellungsverfahren nach Anspruch 8, **dadurch gekennzeichnet, dass** das amorphe kugelförmige Siliciumdioxid SiO₂ an der Oberfläche 2 Mol-% bis 10 Mol-% Zirconium in der Form -Zr-O- und/oder -Zr-OH umfasst.

## Claims

1. A composite material containing a matrix and a fibrous reinforcement, in particular a textile embedded in said matrix, **characterised in that** said matrix comprises a poly(phospho-sialate) type geopolymer of the following empirical formula II: (II) *w*SiO₂:Al₂O₃:*x*P₂O₅:*y*ZrO₂ wherein: *w* is equal to or greater than 1.00 and equal to or less than 3.00; *x* is equal to or greater than 0.20 and equal to or less than 2.00; y is equal to or greater than 0.02 and equal to or less than 0.30 and **in that** said matrix has a melting temperature which is greater than 700°C, in particular equal to or greater than 1200°C.

2. The composite material according to claim 1, **characterised in that** said geopolymer matrix comprises or consists of a nano-composite, which comprises or consists of three phases:
a) a first polymeric phase, essentially consisting of said acid poly(phospho-sialate) geopolymer of formula (I) (-P-O-Si-O-Al-O-)n in which n is greater than 2, and an Al₂O₃ type micronised filler,
b) a second nodular phase consisting of nano spheres of amorphous silica SiO₂ having a diameter which is less than 2 microns, preferably less than 500 nm.
c) a third phase including units of formula -Si-O-(P-O-Zr-O-P-O)-Al-O- and units of formula -Si-O-(P-O-Si-O-Al) and used as crosslinking site between said first polymeric phase and said second nodular phase.

3. The composite material according to any one of the preceding claims, **characterised in that** said geopolymer also comprises a poly(alumino-phosphate) (-Al-O-P-O) geopolymer, of the empirical formula AlPO₄, of the berlinite type or a poly(alumino-phosphate) (-Al-O-P-O) geopolymer, of the empirical formula AlPO₄ of the cristobalite type.

4. The composite material according to claim 2, **characterised in that** said matrix further comprises zirconium phosphate (P-O-Zr-O-P-O), present in said first polymeric phase.

5. The composite material according to any one of claims 2 to 4, **characterised in that** the molar fraction z=(number of moles of zirconium phosphates present in said third phase)/(number of moles of SiO₂ in the matrix) is equal to or greater than 0.025 and equal to or less than 0.3 and in particular equal to y.

6. The composite material according to any one of claims 2 to 4, **characterised in that** the molar fraction z=(number of moles of zirconium phosphates present in said third phase)/(number of moles of SiO₂ in the matrix) is less than 0.025 and **in that** said third phase contains more units of formula -Si-O-(P-O-Si-O-Al) than units of formula -Si-O-(P-O-Zr-O-P-O)-Al-O-.

7. The composite material according to any one of the preceding claims, **characterised in that** said reinforcement is a textile, in particular a fabric selected from the textiles comprising/consisting of fibres selected from aluminosilicate fibres, in particular alumina fibres, glass fibres, silica fibres, silicon carbide fibres, carbon fibres, graphite fibres and mixtures of at least two of these fibres.

8. A method for manufacturing a fibre-reinforced composite material, according to any one of claims 1 to 7, **characterised in that**:
- a resin is produced by mixing, at a temperature substantially equal to 20 C, phosphoric acid H₃PO₄, alumina hydroxide Al(OH₃), nodular amorphous silica SiO₂ including zirconium oxide on the surface thereof, in particular in the -ZrO- and/or -Zr-OH form, and water H₂O, in the following molar ratios: P₂O₅/SiO₂ equal to or greater than 0.20 and equal to or less than 0.66; SiO₂/Al₂O₃ equal to or greater than 1.0 and equal to or less than 3; P₂O₅/Al₂O₃ equal to or greater than 0.20 and equal to or less than 2 and by leaving the obtained mixture to rest for 1 to 2 hours;
- a textile consisting of or comprising fibres selected from aluminosilicate fibres is impregnated, in particular alumina fibres, glass fibres, silica fibres, silicon carbide fibres, carbon fibres, graphite fibres and mixtures of at least two of these fibres with said resin;
- a composite material is produced by curing the textile impregnated with the resin at a temperature which is greater than 80°C, preferably greater than 118°C and less than 260°C, in an autoclave and under vacuum;
- a post-curing of said composite material obtained in the previous step is performed at a temperature which is greater than or equal to 700°C.

9. The manufacturing method according to claim 8, **characterised in that** said nodular amorphous silica SiO₂ includes, on the surface, 2% to 10% by mole of zirconium in the -Zr-O- and/or -Zr-OH form.
